# EUROPEAN PATENT SPECIFICATION

(11) **EP 3 184 660 B1**
(45) Date of publication and mention of the grant of the patent: **25.03.2020**
(21) Application number: 15833672.7
(22) Date of filing: 13.08.2015
(51) Int. Cl.: C22C 38/00, C22C 38/02, C22C 38/04, C22C 38/06, C22C 38/16, C22C 38/60, C21D 8/12, C21D 6/00, H01F 1/16, H01F 1/147

(54) **NON-ORIENTED ELECTRICAL STEEL SHEET AND MANUFACTURING METHOD THEREOF**
NICHTAUSGERICHTETES ELEKTROSTAHLBLECH UND HERSTELLUNGSVERFAHREN DAFÜR
TÔLE D'ACIER ÉLECTROMAGNÉTIQUE NON ORIENTÉ ET SON PROCÉDÉ DE FABRICATION

(30) Priority: 21.08.2014 JP 2014168691
(43) Date of publication of application: 28.06.2017
(73) Proprietor: JFE Steel Corporation, Tokyo 100-0011 (JP)
(72) Inventor: NAKANISHI, Tadashi, Tokyo 100-0011 (JP); NAKAJIMA, Hiroaki, Tokyo 100-0011 (JP); OKUBO, Tomoyuki, Tokyo 100-0011 (JP); ODA, Yoshihiko, Tokyo 100-0011 (JP)
(74) Representative: Haseltine Lake Kempner LLP
(86) International application number: PCT/JP2015/004046
(87) International publication number: WO 2016/027445

(56) References cited:
- WO-A1-2006/068399
- WO-A1-2013/054514
- WO-A1-2013/054514
- WO-A1-2013/137092
- WO-A1-2014/027452
- WO-A1-2014/061246
- JP-A- 2000 219 917
- JP-A- 2001 271 147
- JP-A- 2001 271 147
- JP-A- 2001 348 652
- JP-A- 2004 277 760
- JP-A- 2005 200 713
- JP-A- 2007 154 271
- KR-A- 20000 001 997

## Description

### TECHNICAL FIELD

The disclosure relates to a non-oriented electrical steel sheet mainly used as an iron core material of an electrical device, in particular a non-oriented electrical steel sheet with excellent recyclability from which hindrances to recycling have been eliminated, and a manufacturing method thereof.

### BACKGROUND

Growing concerns over the depletion of the earth's resources and the increase of waste have promoted the movement of recycling resources in various fields. In the iron and steel industry, various types of iron scrap such as vehicles, washing machines, and air conditioners have been utilized as part of steelmaking raw materials, and the amount of iron scrap is expected to further increase in the future. An increase in the amount of scrap in steelmaking means better recyclability. However, since scrap contains Cu and the like that have conventionally been regarded as harmful, there is a problem of degraded quality of steel products.

Consciousness about energy conservation has also been growing to preserve the earth's resources. In the field of motors, motors such as those used for home air conditioners are required to consume less power to reduce energy loss. Thus, non-oriented electrical steel sheets used as iron core materials of motors are also required to have high performance, and non-oriented electrical steel sheets with low iron loss to reduce the iron loss of motors and non-oriented electrical steel sheets with high magnetic flux density to reduce the copper loss of motors are in demand.

Consumers utilizing, as raw materials of castings, scrap generated when punching iron core materials have been on the increase recently, too. To ensure the castability of scrap, the Al content of steel sheets needs to be reduced to less than 0.05%. If the Al content is 0.05% or more, blowholes tend to occur in castings.

Regarding a non-oriented electrical steel sheet with reduced Al content, JP 4126479 B2 (PTL 1) describes that, when the Al content is 0.017% or less and preferably 0.005% or less, the texture is improved to enhance the magnetic flux density. Meanwhile, PTL 1 also describes that such an ultra low Al material degrades in iron loss and has unstable magnetic property.

### CITATION LIST

### Patent Literatures

PTL 1: JP 4126479 B2

JP 2001 271147 A seeks to address the problem of how to inexpensively and stably obtain a non-oriented silicon steel sheet excellent in iron loss characteristics even in the case when a relatively large quantity of inclusions or deposits are contained. Proposed as a solution is a steel sheet having a composition containing, by mass, ≤0.005% C, ≥1.0% (Si+Al) so as to satisfy ≥0.2% Al or ≤0.01% Al, 0.1 to 1.5% Mn and ≤0.1% P and moreover containing ≤0.004% S, 10 to 100 ppm Ca and 0.005 to 0.1% (Sb+Sn+Cu), and as for the inclusions and deposits contained in the steel, the number of the ones with a grain size of 0.1 to 1.0 µm is to be 5,000 to 1×105 pieces/mm² and the number of the ones with a grain size of >1.0 µm is to be ≤500 pieces/mm² by a number counting method prescribed by method A. The crystal grain size in the product sheet is controlled to the range of 50 to 300 µm.

JP 2000 219917 A seeks to address the problem of how to obtain a silicon steel sheet having excellent magnetic properties of high magnetic flux density and low core loss by subjecting steel composed of a specified composition and having specified Q value to hot rolling at the temperature of ≥ the Ac1 point for a specified time, subjecting it to annealing and pickling and thereafter executing cold rolling and finish annealing. Proposed as a solution is a steel composition composed of, by weight, 0.1 to 3.5% Si, 0.1 to 1.5% Mn, ≤0.004% C, ≤0.002% N, ≤0.002% S, ≤0.003% Ti, ≤0.003% Nb, ≤0.005% V, ≤0.003% Zr, ≤0.003% Ca, ≤0.003% As, ≤0.05% Cr, ≤0.01% Sn, ≤0.05% Cu, ≤0.02% O, and the balance Fe, and Q value decided by the formula is controlled to ≤-4.70. The steel slab having αγ transformation is hot-rolled in the temperature region of ≥ the Ac1 point for 10 sec to 5 min. Next, it is subjected to hot rolled sheet annealing and pickling, and cold rolling for one time and finish annealing are executed. If required, skinpass rolling is executed after that. The steel composition may moreover be incorporated with 1 to 2% Al.

JP 2004 277760 A seeks to address the problem of how to provide a non-oriented electromagnetic steel sheet which has adequate recyclability and has improved magnetic properties. Proposed as a solution is a non-oriented electromagnetic steel sheet which comprises, by mass%, 0.004% or less C, 0.7 to 1.5% Si, 0.1 to 0.3% Mn, less than 0.0005% sol. Al, 0.2% or less P, 0.005% or less S, 0.003% or less N, 0.1% or less Cr, 0.005% or less V, 0.001% or less Ti, 0.016 to 0.05% Cu and the balance Fe with unavoidable impurities.

JP 2007 154271 A seeks to address the problem of how to provide a method for producing a nonoriented magnetic steel sheet having the same or higher of magnetic characteristic as the product adding a hot-rolled sheet annealing, in spite of omitting the hot-rolled sheet annealing, without enlarging the unevenness of the shape and the sheet thickness. Proposed as a solution is a method for producing the nonoriented magnetic steel sheet, in which a slab has composition by mass% of ≤0.008% C, 1.5-3.5% Si, 0.2-3.0% Al, 1.9%≤(%Si+%Al), 0.02-1.0% Mn, ≤0.0015% S, ≤0.0020% N, ≤0.008% Ti and the balance Fe with inevitable impurities, is heated in the range of 1050-1150°C and rough-rolled, and a rough bar after rough-rolling, is heated in the range of 1050-1150°C on a table between the rough-rolling and a finish-rolling and under condition of 1050-1150°C the surface temperature before finish-rolling and ≥1000°C the surface temperature after finish-rolling, the hot finish-rolling is performed and also, non-water pouring is performed for 1-7 sec after hot finish-rolling, and thereafter, irrigation cooling is performed and this steel sheet is coiled at ≤700°C.

WO 2013/137092 A1 discloses a method for producing a non-oriented magnetic steel sheet having a high magnetic flux density and little iron loss, said method comprising: hot rolling a steel slab which comprises 0.005 mass% or less of C, 4 mass% or less of Si, 0.03-3 mass% of Mn, 3 mass% or less of Al, 0.03-0.2 mass% of P, 0.005 mass% or less of S, 0.005 mass% or less of N, 0.0005-0.01 mass% of Ca, with an atomic ratio of Ca to S [Ca (mass%)/40]/[S (mass%)/32] being 0.5-3.5, and the balance made up of Fe and unavoidable impurities; hot-rolled annealing the same; cold rolling the same; and then recrystallization annealing the same by heating to at least 740°C at an average temperature rising speed of 100°C/sec or higher.

WO 2014/061246 A1 discloses the pickling weight loss of a hot-rolled steel sheet having a prescribed composition is adjusted to 40 to 100g/m² as determined after subjecting the hot-rolled steel sheet to annealing at 1000°C for 30 sec in a nitrogen atmosphere and then immersion in a 7% HCl solution at 80°C for 60sec. Thus, a hot-rolled steel sheet which is for use in producing a nonoriented magnetic steel sheet and which exhibits not only excellent magnetic characteristics such as iron loss and magnetic flux density but also excellent recyclability and sheet surface appearance can be obtained.

WO 2014/027452 A1 discloses a non-oriented electromagnetic steel sheet having excellent productivity and high magnetic flux density which is obtained inexpensively and stably by a process in which, during manufacturing of a non-oriented electromagnetic steel sheet by a sequence of steps in which a slab having a component composition comprising, in terms of mass%, 0.0050% or less of C, over 3.0% to 5.0% of Si, 0.10% or less of Mn, 0.0010% or less of Al, over 0.040% to 0.2% of P, 0.0040% or less of N, 0.0003% to 0.0050% of S, 0.0015% or more of Ca, and a total of 0.01% to 0.1% of one or both of Sn and Sb, the remainder being Fe and unavoidable impurities, is cast in a continuous casting machine, the slab is heated and subsequently hot rolled, hot-rolled plate annealing is then performed, and after pickling, the final sheet thickness is obtained by a single cold rolling, after which a finishing annealing is performed, in the hot-rolled plate annealing step, the soaking temperature is set to 900°C to 1050°C and the cooling rate after soaking is set to 5°C/s or greater.

WO 2013/054514 A1 discloses that in order to provide a non-oriented magnetic steel sheet that has no surface defects and exhibits high flux density, low iron loss and excellent recycling characteristics, a slab with a composition consisting of 0.005 mass% or less of C, 1.5-4.5 mass% of Si, 0.005 mass% or less of Al, 0.01-0.10 mass% of Mn, 0.0010-0.0050 mass% of Ca, 0.0030 mass% or less of S and 0.0030 mass% or less of N, with Ca/S ≥ 0.80 and the remainder being Fe and unavoidable impurities, is heated at a temperature of 1050-1150°C, is subjected to hot rolling so that the temperature after the completion of the finish rolling is 800-900°C, is rolled up at a temperature of 500-650°C, is subjected to hot-plate annealing at a temperature between 950°C and the temperature at which the slab was heated, and after being subjected to hot or cold rolling, is further subjected to finish annealing at a temperature of 950°C or higher in an atmosphere containing at least 10 vol% hydrogen and having a dew point of -20°C or lower.

### SUMMARY

### (Technical Problem)

As mentioned above, a problem when recycling a non-oriented electrical steel sheet lies in that the magnetic property becomes unstable in the case of reducing the Al content in order to reuse the non-oriented electrical steel sheet as iron scrap. It could therefore be helpful to provide a non-oriented electrical steel sheet with excellent recyclability and a manufacturing method thereof.

### (Solution to Problem)

As a result of extensive research for a non-oriented electrical steel sheet with excellent recyclability, we discovered that the magnetic property varies significantly in the case where Cu derived from the use of scrap material and the like is mixed into an ultra low Al material, as described later. We also discovered that adding Ca to such steel in which Cu has been mixed into the ultra low Al material is very effective in suppressing the variation of the magnetic property. The disclosure is based on the aforementioned discoveries.

We provide the following:
1. A non-oriented electrical steel sheet having a chemical composition consisting of, in mass%: C: 0.0050% or less; Si: 1.0% or more and 4.0% or less; Mn: 0.10% or more and 3.0% or less; Sol. Al: 0.0020% or less; P: more than 0.01% and 0.20% or less; S: 0.0050% or less; N: 0.0050% or less; Cu: 0.02% or more and less than 0.10%; and Ca: 0.0005% or more and 0.0100% or less, and optionally one or two selected from Sn and Sb: 0.01 mass% or more and 0.1 mass% or less in total, and a balance being Fe and incidental impurities.
2. A manufacturing method of a non-oriented electrical steel sheet, including: hot rolling a slab having a chemical composition consisting of, in mass%: C: 0.0050% or less; Si: 1.0% or more and 4.0% or less; Mn: 0.10% or more and 3.0% or less; Sol. Al: 0.0020% or less; P: more than 0.01% and 0.20% or less; S: 0.0050% or less; N: 0.0050% or less; Cu: 0.02% or more and less than 0.10%; and Ca: 0.0005% or more and 0.0100% or less, optionally one or two selected from Sn and Sb: 0.01 mass% or more and 0.1 mass% or less in total, and a balance being Fe and incidental impurities; pickling an obtained hot rolled sheet without hot band annealing, and then cold rolling the sheet; and final annealing the cold rolled sheet, wherein after finish rolling in the hot rolling, the hot rolled sheet is coiled at a temperature of 650 °C or more.

### (Advantageous Effect)

It is thus possible to stably provide a non-oriented electrical steel sheet with excellent recyclability which significantly contributes to the protection of the environment and resources on a global scale.

### BRIEF DESCRIPTION OF THE DRAWINGS

In the accompanying drawings:
FIGS. 1A and 1B are graphs illustrating the influence of Cu on the magnetic property in an ultra low Al material;
FIGS. 2A and 2B are graphs illustrating the influence of Cu on the magnetic property in an Al added material;
FIGS. 3A and 3B are graphs illustrating the influence of Cu on the magnetic property in an ultra low Al material to which Ca is added; and
FIGS. 4A and 4B are graphs illustrating the influence of Cu on the magnetic property in an Al added material to which Ca is added.

### DETAILED DESCRIPTION

Detailed description is given below based on experimental results.

The representations "%" and "ppm" regarding each component are "mass%" and "mass ppm", unless otherwise noted. The magnetic property was evaluated as follows: Epstein test pieces were collected in the rolling direction (L) and the direction orthogonal to the rolling direction (C), and measurement was performed by Epstein's method described in JIS C2550, to evaluate the magnetic property based on B₅₀ (magnetic flux density with a magnetizing force of 5000 A/m) and W_{15/50} (iron loss when excited with a magnetic flux density of 1.5 T and a frequency of 50 Hz).

First, the following experiment was conducted to determine the influence of ultra low Al content in a non-oriented electrical steel sheet on the magnetic property.

Steel having a steel composition containing C: 0.002%, Si: 1.6%, Mn: 0.5%, P: 0.04%, Al: 0.0005% or less, N: 0.002%, and S: 0.002% as an ultra low Al material was tapped for 8 charges, and hot rolled to 2.8 mm in sheet thickness. After pickling the hot rolled sheet, the hot rolled sheet was cold rolled to 0.5 mm in sheet thickness, and subjected to final annealing of 1000 °C × 10 s in a 20%H₂-80%N₂ atmosphere. As a result of studying the magnetic property of the obtained material by making test pieces per charge, we found out that the magnetic property varied significantly among the charges. Moreover, component analysis showed that a material with degraded magnetic property contained 0.02% or more Cu which was higher than those of other materials, suggesting that the magnetic property degraded due to fine Cu precipitation or the like.

Since scrap sources are, for example, electrical appliances such as washing machines or air conditioners, Cu of conductors is incidentally contained in scrap. Given that the use ratio of scrap as steelmaking raw materials has increased in recent years, it appears that Cu derived from scrap was mixed in the material with degraded magnetic property.

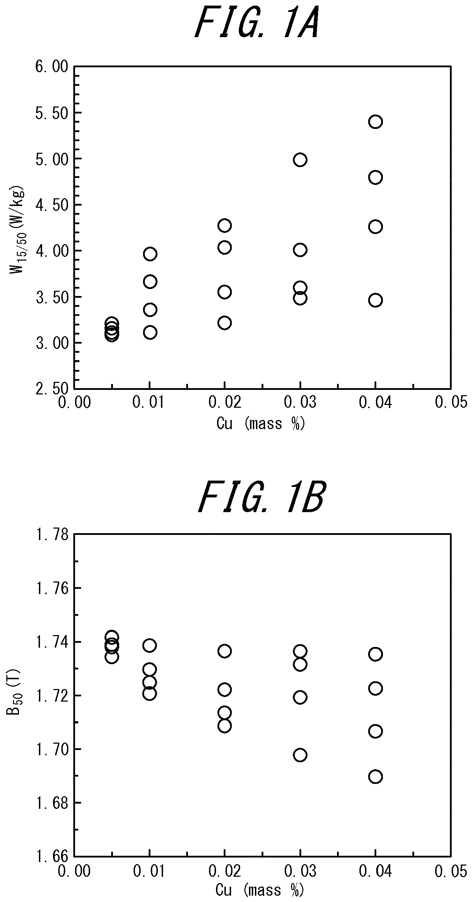

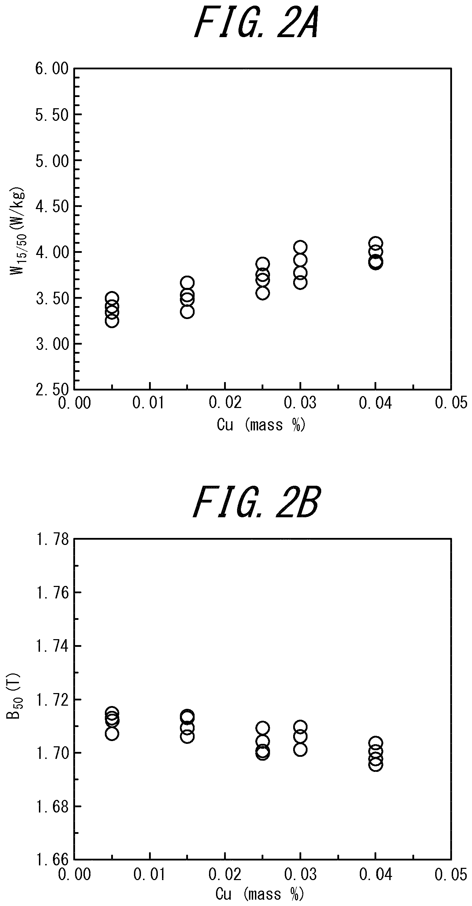

We accordingly studied the influence of Cu on the magnetic property. Steel containing C: 0.002%, Si: 1.6%, Mn: 0.5%, P: 0.04%, Al: 0.0005% or less, N: 0.002%, and S: 0.002% as a ultra low Al material and steel containing C: 0.002%, Si: 1.3%, Mn: 0.5%, P: 0.04%, Al: 0.3%, N: 0.002%, and S: 0.002% as an Al added material for comparison were each obtained by steelmaking while being changed in the range of Cu: 0.005% to 0.04% (no Ca added to both materials). The steel was then hot rolled to 2.8 mm in sheet thickness. After pickling the hot rolled sheet, the hot rolled sheet was cold rolled to 0.5 mm in sheet thickness, and subjected to final annealing of 1000 °C × 10 s in a 20%H₂-80%N₂ atmosphere. The results of studying the respective magnetic properties of these final annealed sheets are illustrated in FIGS. 1A and 1B (ultra low Al + Ca not added) and FIGS. 2A and 2B (Al added + Ca not added). FIGS. 1A and 1B respectively illustrate the iron loss and magnetic flux density measurement results, and FIGS. 2A and 2B respectively illustrate the iron loss and magnetic flux density measurement results.

In the Al added material illustrated in FIGS. 2A and 2B, the magnetic property degradation due to the Cu increase was relatively small. In the ultra low Al material illustrated in FIGS. 1A and 1B, on the other hand, the magnetic property varied significantly as Cu increased, and the most degraded magnetic property with the same Cu amount was very poor. When Cu was about 0.01%, however, the ultra low Al material had better magnetic property than the Al added material. Thus, the ultra low Al material has the potential for excellent property, but is problematic in that its magnetic property degrades or varies significantly with an increase of Cu.

The reason for this is not clear, but is believed as follows: Since the ultra low Al material has no element for coarsening nitride, the nitride becomes fine, and some kind of interaction between the fine nitride and the Cu sulfide leads to property variation. Favorable property was actually obtained when sufficiently reducing Cu in the ultra low Al material. Hence, reducing Cu in the ultra low Al material can be a means for stabilizing the magnetic property. To do so, however, the use ratio of iron scrap needs to be decreased, against the recent trend to protect the environment and resources.

We accordingly considered using Ca to render Cu harmless.

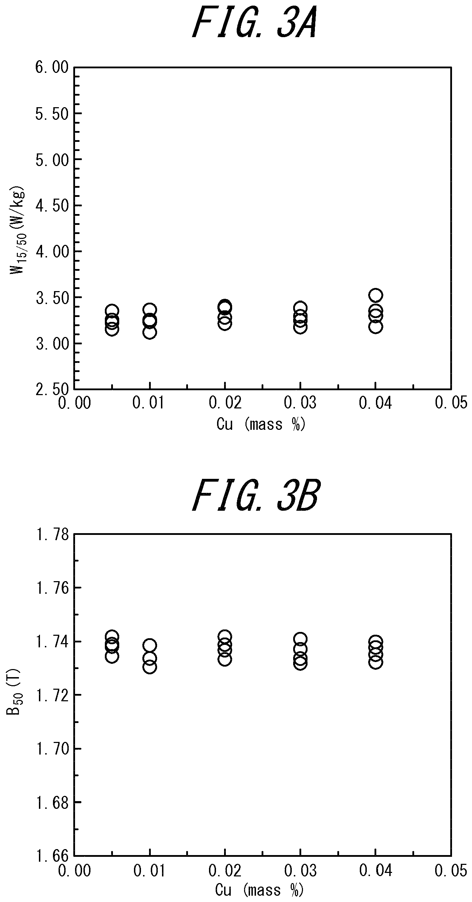

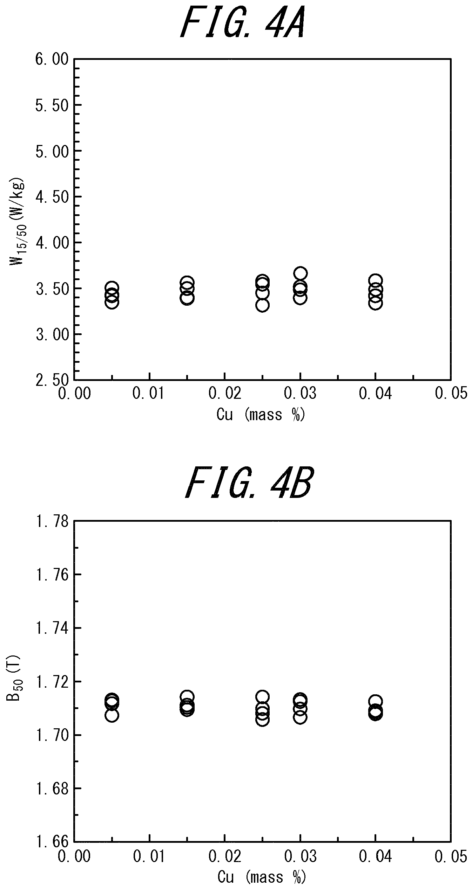

Steel containing C: 0.002%, Si: 1.6%, Mn: 0.5%, P: 0.04%, Al: 0.0005% or less, N: 0.002%, S: 0.002%, and Ca: 0.003% as an ultra low Al material (Ca added) and steel containing C: 0.002%, Si: 1.3%, Mn: 0.5%, P: 0.04%, Al: 0.3%, N: 0.002%, S: 0.002%, and Ca: 0.003% as an Al added material (Ca added) for comparison were each obtained by steelmaking while being changed in the range of Cu: 0.005% to 0.04%. The steel was then hot rolled to 2.8 mm in sheet thickness. After pickling the hot rolled sheet, the hot rolled sheet was cold rolled to 0.5 mm in sheet thickness, and subjected to final annealing of 1000 °C × 10 s in a 20%H₂-80%N₂ atmosphere. The results of studying the respective magnetic properties of these final annealed sheets are illustrated in FIGS. 3A and 3B (ultra low Al + Ca added) and FIGS. 4A and 4B (Al added + Ca added).

As illustrated in FIGS. 3A, 3B, 4A and 4B, the degradation or variation of the magnetic property due to the Cu increase was suppressed by adding Ca. This effect was very remarkable in the ultra low Al material illustrated in FIGS. 3A and 3B, which had better magnetic property than the Al added material regardless of the amount of Cu.

Based on the aforementioned discoveries, it is possible to provide a non-oriented electrical steel sheet with excellent recyclability that, even though being an ultra low Al material, ensures favorable magnetic property by regulating especially the amounts of Al, Cu, and Ca.

The reasons for limiting the steel components to the aforementioned composition range are described below.

### C: 0.0050% or less

C degrades iron loss property, and so the C content is desirably as low as possible. If the C content is more than 0.0050%, the iron loss increases significantly. The C content is therefore limited to 0.0050% or less. Since the C content is desirably as low as possible, its lower limit need not be particularly limited. Given that reducing the content to less than 0.0003% in industrial-scale production requires considerable cost, however, the lower limit is preferably 0.0003%.

### Si: 1.0% or more and 4.0% or less

Si has an effect of increasing electrical resistance to reduce iron loss, and so its lower limit is 1.0%. If the Si content is more than 4.0%, rollability decreases. The Si content is therefore limited to 4.0% or less. The Si content is preferably 1.5% to 3.3%.

### Al: 0.0020% or less

In terms of utilizing scrap by consumers, the Al content is recommended to be less than 0.05% to ensure castability from scrap raw materials. In the disclosure, the Al content needs to be further reduced to less than 0.0050% in order to improve the texture and enhance the magnetic flux density. The Al content is 0.0020% or less.

### P: more than 0.01% and 0.20% or less

P is an element that, in a small amount, is useful to improve hardness. Since optimal hardness differs among consumers, P is added as appropriate in the range of more than 0.01%. Meanwhile, excessively adding P causes lower rollability, and so the P content is limited to 0.20% or less. The P content is preferably 0.03% to 0.10%.

### N: 0.0050% or less

N degrades the magnetic property as with the aforementioned C, and so the N content is limited to 0.0050% or less. Since the N content is desirably as low as possible, its lower limit need not be particularly limited.

### S: 0.0050% or less

S forms precipitates or inclusions and degrades the magnetic property of the product, and so the S content is desirably as low as possible. To suppress magnetic property degradation, the S content is limited to 0.0050% or less. Since the S content is desirably as low as possible, its lower limit need not be particularly limited.

### Mn: 0.10% or more and 3.0% or less

Mn is an element effective in increasing electrical resistance to reduce iron loss, as with Si. To prevent hot shortness, the Mn content needs to be 0.10% or more. If the Mn content is more than 3.0%, however, a decrease in saturation magnetic flux density leads to a decrease in magnetic flux density. The upper limit is therefore 3.0%. The Mn content is preferably 0.20% to 1.0%.

### Ca: 0.0005% or more and 0.0100% or less

In the disclosure, the material has high Cu content and extremely low Al content. Accordingly, Ca is added to stabilize the magnetic property. If the Ca content is less than 0.0005%, the effect is not sufficient. If the Ca content is more than 0.0100%, Ca oxide increases and causes higher iron loss. The Ca content is therefore 0.0005% or more and 0.0100% or less. The Ca content is preferably 0.001% or more and 0.005% or less.

### Cu: 0.02% or more and less than 0.10%

The disclosure is intended to maximize the scrap ratio of steelmaking raw materials, to promote recycling of resources. In the case where the scrap ratio is increased, the raw material of the non-oriented electrical steel sheet contains 0.02% or more Cu. This is because scrap sources are, for example, electrical appliances such as washing machines or air conditioners, and so Cu of conductors is incidentally contained in scrap. If the Cu content is 0.1% or more, however, it is difficult to prevent property degradation even when Ca is added. The upper limit is therefore less than 0.1%.

In addition to the basic components described above, one or two selected from Sn and Sb may be added so that their total content is 0.01% or more and 0.1% or less, according to need.

### Sn, Sb: 0.01% or more and 0.1% or less in total

Sn and Sb both have an effect of improving the texture and enhance the magnetic property. One or both of Sn and Sb may be added to achieve this effect. In either case, the total content is preferably 0.01% or more. If Sn and/or Sb are added excessively, however, the steel becomes brittle and sheet fractures or scabs during steel sheet manufacturing increase. Accordingly, whether one or both of Sn and Sb are added, the total content is preferably 0.1% or less. The total content is more preferably 0.02% to 0.08%.

The balance other than the components described above is iron and incidental impurities. Examples of the incidental impurities include V ≤ 0.004%, Nb ≤ 0.004%, B ≤ 0.0005%, Ni ≤ 0.05%, Cr ≤ 0.05%, and Ti ≤ 0.002%.

A manufacturing method according to the disclosure is described below.

When manufacturing a non-oriented electrical steel sheet according to the disclosure, the coiling temperature after hot rolling needs to be regulated. Except this, the manufacturing method can be realized using steps and lines used for typical non-oriented electrical steel sheets.

For example, steel having a predetermined chemical composition obtained by steelmaking using a converter, an electric heating furnace, or the like is subjected to secondary refining in a degassing line, and casted and hot rolled. Steps such as pickling, cold rolling, final annealing, and insulating coating then follow to manufacture the non-oriented electrical steel sheet.

The coiling temperature after hot rolling needs to be 650 °C or more. If the steel sheet before cold rolling has not sufficiently recrystallized, ridging occurs or the magnetic property degrades. Accordingly, the coiling temperature needs to be 650 °C or more to facilitate recrystallization. The coiling temperature is preferably 670 °C or more.

The thickness of the hot rolled sheet is not particularly limited, but is preferably 1.5 mm to 3.0 mm, and more preferably 1.7 mm to 2.8 mm. If the thickness is less than 1.5 mm, hot rolling troubles increase. If the thickness is more than 3.0 mm, cold rolling reduction increases and the texture degrades. The thickness of the cold rolled sheet is not particularly limited, but is preferably 0.20 mm to 0.50 mm. If the thickness is less than 0.20 mm, productivity decreases. If the thickness is more than 0.50 mm, the iron loss reduction effect is low.

The aforementioned cold rolling may be warm rolling with a sheet temperature of about 200 °C. The soaking temperature in the aforementioned final annealing which follows is preferably 700 °C or more and 1150 °C or less. If the soaking temperature in the annealing is less than 700 °C, there is a possibility of not only recrystallization being insufficient and causing significant degradation in magnetic property but also the sheet shape adjustment effect by continuous annealing being insufficient. If the soaking temperature is more than 1150 °C, on the other hand, there is a possibility of crystal grains being extremely coarsened and causing an increase in iron loss especially in a high frequency range.

### EXAMPLES

Hot metal was blown in a converter and then degassed to be adjusted to each chemical composition shown in Table 1. After this, the metal was cast into a slab using a continuous casting machine, and the slab was heated at 1120 °C for 1 hour and then hot rolled to 2.8 mm in sheet thickness. The finisher delivery temperature in the hot rolling was 900 °C, and coiling was performed at 680 °C. After the hot rolling, the hot rolled sheet was pickled without hot band annealing, cold rolled to 0.50 mm in sheet thickness, and final annealed at 980 °C for 10 seconds.

Here, for steel samples F and C2, the coiling temperature after the hot rolling was 550 °C. Moreover, for steel sample C2, hot band annealing with a soaking temperature of 1000 °C and a soaking time of 30 seconds was performed by continuous annealing, after the hot rolling. Furthermore, steel sample H cracked during the hot rolling, and so the steps after the hot rolling were not performed on steel sample H. In the subsequent cold rolling, steel samples M and G fractured and steel sample F developed ridging, and so the steps after the cold rolling were not performed on these steel samples.

The magnetic property of each obtained product sheet was studied. The magnetic property was evaluated as follows: Epstein test pieces were collected in the rolling direction (L) and the direction orthogonal to the rolling direction (C), and measurement was performed by Epstein's method described in JIS C2550, to evaluate the magnetic property based on B₅₀ (magnetic flux density with a magnetizing force of 5000 A/m) and W_{10/400} (iron loss when excited with a magnetic flux density of 1.0 T and a frequency of 400 Hz).

The results are shown in Table 1.

### [Table 1]

**Table 1**

| Steel sample ID | Chemical composition (mass%) | | | | | | | | | | | Magnetic property of product sheet | | Remarks |
|---|---|---|---|---|---|---|---|---|---|---|---|---|---|---|
| | C | Si | Mn | Sol.Al | P | S | N | Cu | Sn | Sb | Ca | W_{15/50} (W/kg) | B₅₀ (T) | |
| A | 0.0018 | 0.85 | 0.21 | 0.0011 | 0.08 | 0.0015 | 0.0021 | 0.03 | 0.037 | - | 0.0031 | 5.30 | 1.741 | Comparative Example |
| B | 0.0019 | 1.27 | 0.23 | 0.0012 | 0.09 | 0.0017 | 0.0017 | 0.02 | 0.041 | - | 0.0029 | 3.98 | 1.739 | Example |
| C | 0.0015 | 1.61 | 0.42 | 0.0009 | 0.02 | 0.0015 | 0.0018 | 0.04 | 0.038 | - | 0.0032 | 3.42 | 1.738 | Example |
| D | 0.0021 | 1.63 | 0.38 | 0.0001 | 0.11 | 0.0014 | 0.0022 | 0.04 | 0.035 | - | 0.0025 | 3.38 | 1.741 | Example |
| E | 0.0020 | 2.13 | 0.53 | 0.0004 | 0.08 | 0.0018 | 0.0017 | 0.03 | 0.032 | - | 0.0033 | 2.75 | 1.722 | Example |
| F | 0.0018 | 2.15 | 0.52 | 0.0002 | 0.07 | 0.0015 | 0.0020 | 0.04 | 0.031 | - | 0.0029 | Ridging after cold rolling | | Comparative Example |
| G | 0.0019 | 4.05 | 0.65 | 0.0011 | 0.08 | 0.0022 | 0.0022 | 0.04 | 0.041 | - | 0.0030 | Cracking during cold rolling | | Comparative Example |
| H | 0.0012 | 1.65 | 0.02 | 0.0008 | 0.07 | 0.0014 | 0.0018 | 0.04 | 0.038 | - | 0.0037 | Cracking during hot rolling | | Comparative Example |
| I | 0.0019 | 1.58 | 1.23 | 0.0007 | 0.09 | 0.0021 | 0.0018 | 0.02 | 0.018 | - | 0.0028 | 2.98 | 1.731 | Example |
| J | 0.0014 | 1.60 | 3.32 | 0.0008 | 0.09 | 0.0020 | 0.0015 | 0.03 | 0.033 | 0.015 | 0.0031 | 2.61 | 1.695 | Comparative Example |
| K | 0.0025 | 1.63 | 0.48 | 0.0021 | 0.08 | 0.0017 | 0.0014 | 0.03 | 0.017 | 0.029 | 0.0028 | 3.45 | 1.737 | Reference Example |
| L | 0.0016 | 1.62 | 0.46 | 0.0055 | 0.08 | 0.0016 | 0.0019 | 0.04 | 0.038 | - | 0.0027 | 4.62 | 1.710 | Comparative Example |
| M | 0.0019 | 1.71 | 0.51 | 0.0004 | 0.22 | 0.0012 | 0.0022 | 0.04 | 0.032 | - | 0.0028 | Cracking during cold rolling | | Comparative Example |
| N | 0.0019 | 1.62 | 0.44 | 0.0012 | 0.09 | 0.0058 | 0.0023 | 0.04 | 0.035 | - | 0.0031 | 4.57 | 1.712 | Comparative Example |
| O | 0.0018 | 1.72 | 0.51 | 0.0011 | 0.07 | 0.0016 | 0.0055 | 0.02 | 0.036 | - | 0.0028 | 4.55 | 1.712 | Comparative Example |
| P | 0.0019 | 1.63 | 0.52 | 0.0008 | 0.08 | 0.0018 | 0.0022 | 0.04 | 0.037 | - | 0.0002 | 4.53 | 1.710 | Comparative Example |
| Q | 0.0017 | 1.59 | 0.48 | 0.0011 | 0.09 | 0.0015 | 0.0015 | 0.04 | 0.032 | - | 0.0041 | 3.47 | 1.738 | Example |
| R | 0.0021 | 1.55 | 0.38 | 0.0008 | 0.06 | 0.0021 | 0.0017 | 0.02 | - | - | 0.0027 | 3.43 | 1.720 | Example |
| S | 0.0019 | 1.61 | 0.42 | 0.0008 | 0.08 | 0.0015 | 0.0018 | 0.04 | - | 0.038 | 0.0033 | 3.40 | 1.737 | Example |
| T | 0.0022 | 1.58 | 0.39 | 0.0007 | 0.07 | 0.0016 | 0.0018 | 0.04 | 0.160 | - | 0.0029 | Cracking during cold rolling | | Comparative Example |
| U | 0.0018 | 1.28 | 0.25 | 0.0010 | 0.08 | 0.0017 | 0.0015 | 0.02 | - | - | 0.0033 | 3.96 | 1.727 | Example |
| V | 0.0017 | 1.60 | 0.39 | 0.0011 | 0.03 | 0.0016 | 0.0017 | 0.03 | - | - | 0.0035 | 3.47 | 1.724 | Example |
| W | 0.0019 | 2.10 | 0.55 | 0.0006 | 0.08 | 0.0016 | 0.0016 | 0.03 | - | - | 0.0034 | 2.77 | 1.712 | Example |
| X | 0.0015 | 1.65 | 0.48 | 0.0042 | 0.09 | 0.0012 | 0.0013 | 0.03 | 0.044 | - | 0.0036 | 4.13 | 1.721 | Reference Example |
| Y | 0.0019 | 2.11 | 0.51 | 0.0005 | 0.07 | 0.0018 | 0.0015 | 0.15 | 0.035 | - | 0.0035 | 3.31 | 1.699 | Comparative Example |
| Z | 0.0018 | 2.09 | 0.53 | 0.0002 | 0.06 | 0.0015 | 0.0017 | 0.07 | 0.043 | - | 0.0038 | 3.04 | 1.709 | Example |
| A2 | 0.0016 | 1.60 | 0.40 | 0.0002 | 0.09 | 0.0015 | 0.0016 | 0.03 | 0.039 | - | 0.0018 | 3.68 | 1.729 | Example |
| B2 | 0.0018 | 1.58 | 0.43 | 0.0003 | 0.08 | 0.0017 | 0.0018 | 0.03 | 0.041 | - | 0.0081 | 3.52 | 1.733 | Example |
| C2 | 0.0020 | 1.65 | 0.44 | 0.0003 | 0.10 | 0.0016 | 0.0021 | 0.04 | 0.034 | - | 0.0037 | 3.35 | 1.748 | Example |
| D2 | 0.0017 | 1.62 | 0.44 | 0.0007 | 0.01 | 0.0016 | 0.0017 | 0.04 | 0.037 | - | 0.0031 | 3.41 | 1.707 | Comparative Example |
| E2 | 0.0016 | 2.05 | 0.49 | 0.0004 | 0.05 | 0.0015 | 0.0014 | 0.13 | 0.040 | - | 0.0035 | 3.22 | 1.705 | Comparative Example |
| F2 | 0.0017 | 2.08 | 0.51 | 0.0003 | 0.06 | 0.0016 | 0.0015 | 0.09 | 0.044 | - | 0.0036 | 3.09 | 1.708 | Example |
| G2 | 0.0018 | 2.06 | 0.50 | 0.0002 | 0.06 | 0.0017 | 0.0016 | 0.06 | 0.041 | - | 0.0038 | 2.98 | 1.711 | Example |
| H2 | 0.0020 | 1.55 | 0.45 | 0.0004 | 0.06 | 0.0018 | 0.0018 | 0.04 | 0.038 | - | 0.0110 | 4.70 | 1.729 | Comparative Example |
| 12 | 0.0017 | 1.59 | 0.43 | 0.0002 | 0.07 | 0.0017 | 0.0017 | 0.03 | 0.043 | - | 0.0092 | 4.38 | 1.732 | Example |
| J2 | 0.0018 | 1.61 | 0.40 | 0.0005 | 0.08 | 0.0016 | 0.0016 | 0.03 | 0.038 | - | 0.0007 | 4.11 | 1.727 | Example |

As shown in Table 1, the steel samples manufactured according to the disclosure had no fracture in the hot rolling and cold rolling, and exhibited favorable magnetic property.

## Claims

1. A non-oriented electrical steel sheet having a chemical composition consisting of, in mass%:
C: 0.0050% or less;
Si: 1.0% or more and 4.0% or less;
Mn: 0.10% or more and 3.0% or less;
Sol. Al: 0.0020% or less;
P: more than 0.01% and 0.20% or less;
S: 0.0050% or less;
N: 0.0050% or less;
Cu: 0.02% or more and less than 0.10%; and
Ca: 0.0005% or more and 0.0100% or less, and
optionally one or two selected from Sn and Sb: 0.01 mass% or more and 0.1 mass% or less in total,
and a balance being Fe and incidental impurities.

2. A manufacturing method of a non-oriented electrical steel sheet, comprising:
hot rolling a slab having a chemical composition consisting of, in mass%:
C: 0.0050% or less;
Si: 1.0% or more and 4.0% or less;
Mn: 0.10% or more and 3.0% or less;
Sol. Al: 0.0020% or less;
P: more than 0.01% and 0.20% or less;
S: 0.0050% or less;
N: 0.0050% or less;
Cu: 0.02% or more and less than 0.10%; and
Ca: 0.0005% or more and 0.0100% or less,
optionally one or two selected from Sn and Sb: 0.01 mass% or more and 0.1 mass% or less in total,
and a balance being Fe and incidental impurities;
pickling an obtained hot rolled sheet without hot band annealing, and then cold rolling the sheet; and
final annealing the cold rolled sheet,
wherein after finish rolling in the hot rolling, the hot rolled sheet is coiled at a temperature of 650 °C or more.

## Patentansprüche

1. Nichtausgerichtetes Elektrostahlblech, das eine chemische Zusammensetzung aufweist, die, in Masse-%, besteht aus:
C: 0,0050 % oder weniger;
Si: 1,0 % oder mehr und 4,0 % oder weniger;
Mn: 0,10 % oder mehr und 3,0 % oder weniger;
löslichem Al: 0,0020 % oder weniger;
P: mehr als 0,01 % und 0,20 % oder weniger;
S: 0,0050 % oder weniger;
N: 0,0050 % oder weniger;
Cu: 0,02 % oder mehr und weniger als 0,10 %; und
Ca: 0,0005 % oder mehr und 0,0100 % oder weniger und
wahlweise einem oder zwei ausgewählt von Sn und Sb: insgesamt 0,01 Masse-% oder mehr und 0,1 Masse-% oder weniger
und wobei der Rest aus Fe und zufälligen Verunreinigungen besteht.

2. Herstellungsverfahren für ein nichtausgerichtetes Elektrostahlblech, umfassend:
Heißwalzen einer Bramme, die eine chemische Zusammensetzung aufweist, die, in Masse-%, besteht aus:
C: 0,0050 % oder weniger;
Si: 1,0 % oder mehr und 4,0 % oder weniger;
Mn: 0,10 % oder mehr und 3,0 % oder weniger;
löslichem Al: 0,0020 % oder weniger;
P: mehr als 0,01 % und 0,20 % oder weniger;
S: 0,0050 % oder weniger;
N: 0,0050 % oder weniger;
Cu: 0,02 % oder mehr und weniger als 0,10 %; und
Ca: 0,0005 % oder mehr und 0,0100 % oder weniger,
wahlweise einem oder zwei ausgewählt von Sn und Sb: insgesamt 0,01 Masse-% oder mehr und 0,1 Masse-% oder weniger,
und wobei der Rest aus Fe und zufälligen Verunreinigungen besteht;
Beizen eines erhaltenen heißgewalzten Blechs ohne Heißbandglühen und dann Kaltwalzen des Blechs; und
abschließendes Glühen des kaltgewalzten Blechs,
wobei, nach Fertigwalzen beim Heißwalzen, das heißgewalzte Blech bei einer Temperatur von 650 °C oder mehr aufgerollt wird.

## Revendications

1. Tôle d'acier électrique non orienté ayant une composition chimique comprenant, en % en masse :
C : 0,0050 % ou moins ;
Si : 1,0 % ou plus et 4,0 % ou moins ;
Mn : 0,10 % ou plus et 3,0 % ou moins ;
Al sol. : 0,0020 % ou moins ;
P : plus de 0,01 % et 0,20 % ou moins ;
S : 0,0050 % ou moins ;
N : 0,0050 % ou moins ;
Cu : 0,02 % ou plus et moins de 0,10 % ; et
Ca : 0,0005 % ou plus et 0,0100 % ou moins, et
facultativement un ou deux choisis parmi Sn et Sb : 0,01 % en masse ou plus et 0,1 % en masse ou moins au total,
et le reste étant du Fe et des impuretés accidentelles.

2. Procédé de fabrication d'une tôle d'acier électrique non orienté, comprenant les étapes consistant à :
laminer à chaud une brame ayant une composition chimique comprenant, en % en masse :
C : 0,0050 % ou moins ;
Si : 1,0 % ou plus et 4,0 % ou moins ;
Mn : 0,10 % ou plus et 3,0 % ou moins ;
Al sol. : 0,0020 % ou moins ;
P : plus de 0,01 % et 0,20 % ou moins ;
S : 0,0050 % ou moins ;
N : 0,0050 % ou moins ;
Cu : 0,02 % ou plus et moins de 0,10 % ; et
Ca : 0,0005 % ou plus et 0,0100 % ou moins,
facultativement un ou deux choisis parmi Sn et Sb : 0,01 % en masse ou plus et 0,1 % en masse ou moins au total,
et le reste étant du Fe et des impuretés accidentelles ;
décaper une tôle laminée à chaud obtenue sans recuit en bande chaude, et laminer la tôle à froid ; et
effectuer un recuit de finition de la tôle laminée à froid,
dans lequel après un laminage de finition lors du laminage à chaud, la tôle laminée à chaud est enroulée à une température de 650°C ou plus.
